# EUROPÄISCHE PATENTSCHRIFT

(11) **EP 3 390 178 B1**
(45) Veröffentlichungstag und Bekanntmachung des Hinweises auf die Patenterteilung: **30.10.2019**
(21) Anmeldenummer: 16810362.0
(22) Anmeldetag: 13.12.2016
(51) Int. Cl.: B60T 13/26, B60T 13/66, B60T 13/68

(54) **EINRICHTUNG ZUM STEUERN EINER ELEKTRO-PNEUMATISCHEN PARKBREMSEINRICHTUNG EINES FAHRZEUGS WÄHREND DER FAHRT ALS HILFSBREMSE**
SYSTEM FOR CONTROLLING AN ELECTROPNEUMATIC PARKING BRAKE DEVICE OF A VEHICLE WHILE DRIVING AS AN AUXILIARY BRAKE
SYSTEME POUR COMMANDER UN SYSTÈME DE FREIN DE STATIONNEMENT ÉLECTROPNEUMATIQUE D'UN VÉHICULE PENDANT LA CONDUITE EN TANT QUE FREIN DE SECOURS

(30) Priorität: 16.12.2015 DE 102015121950
(43) Veröffentlichungstag der Anmeldung: 24.10.2018
(73) Patentinhaber: KNORR-BREMSE Systeme für Nutzfahrzeuge GmbH, 80809 München (DE)
(72) Erfinder: WERNER, Frank, 71254 Ditzingen (DE)
(86) Internationale Anmeldenummer: PCT/EP2016/080835
(87) Internationale Veröffentlichungsnummer: WO 2017/102753

(56) Entgegenhaltungen:
- EP-A1- 1 504 975
- EP-A2- 0 995 657
- EP-A2- 2 058 186
- EP-A2- 2 939 891
- DE-A1- 19 633 835
- DE-A1- 19 942 533
- DE-A1-102006 041 008
- DE-A1-102013 014 672

## Beschreibung

Die Erfindung betrifft eine Drucklufteinrichtung eines Fahrzeugs mit einem elektropneumatischen Bremssystem gemäß dem Oberbegriff von Anspruch 1.

Eine solche Drucklufteinrichtung mit einer elektro-pneumatischen Parkbremseinrichtung ist beispielsweise aus DE 10 2008 007 877 B3 bekannt, wobei die Magnetventileinrichtung zusammen mit dem elektronischen Parkbremssteuergerät ein Parkbremsmodul bildet, welches zwischen den Druckluftvorrat und die Federspeicherbremszylinder geschaltet ist. Bei solchen Federspeicherbremszylindern handelt es sich um sog. passive Bremszylinder, bei welchen durch Belüften einer Federspeicherbremskammer ein Federspeicherbremskolben gegen die Wirkung wenigstens einer Speicherfeder in Bremslösestellung und durch Entlüften der Federspeicherbremskammer in Bremszuspannstellung gebracht wird. Meist sind diese Federspeicherbremszylinder an der Hinterachse von schweren Nutzfahrzeugen angeordnet und mit pneumatischen Betriebsbremszylindern der Betriebsbremse zu Kombizylindern verbaut.

Bei solchen elektropneumatischen Parkbremseinrichtungen wird wenigstens ein einem abgebremsten Rad zugeordneter Federspeicherbremszylinder zum Zuspannen der Parkbremse durch Senken des Bremsdrucks entlüftet und zum Lösen der Parkbremse durch Steigern des Bremsdrucks belüftet, wobei die Parkbremseinrichtung durch elektrische Parkbremssignale einer Parkbremsbedieneinrichtung gesteuert wird, von welchen ein Parkbremssignal einen Zustand "Bremslösen", ein Parkbremssignal einen Zustand "Bremszuspannen" und ein Bremssignal einen Zustand "Neutral" repräsentiert.

Je nach Ausstattungsumfang der elektropneumatischen Magnetventileinrichtung mit elektromagnetischen Ventilen, z.B. Einlassventil, Auslassventil, Bistabilventil, Relaisventil können von einer solchen elektro-pneumatischen Parkbremseinrichtung neben der originären Parkbremsfunktion und Fahrfunktion, bei welcher der wenigstens eine Federspeicherbremszylinder bei still stehendem Fahrzeug in Bremszuspannstellung bzw. in Bremslösestellung gebracht wird, in der Regel noch weitere Funktionen ausgeführt werden.

Zu diesen weiteren Funktionen zählt beispielsweise eine Testfunktion, bei welcher die Federspeicherbremse des Zugfahrzeugs zugespannt und die Betriebsbremse eines Anhängers im stillstehenden Zustand gelöst wird, um zu testen, ob das eingebremste Zugfahrzeug den ungebremsten Anhänger im Stillstand halten kann.

Weiterhin kann bei der elektro-pneumatischen Parkbremseinrichtung auch eine Streckbremsfunktion vorgesehen sein, bei welcher bei in Fahrt befindlicher Zugfahrzeug-Anhänger-Kombination lediglich die Bremsen des Anhängers betätigbar sind, um die Zugfahrzeug-Anhänger-Kombination z.B. bei einem unerwünschten Einknicken zu strecken.

Weiterhin ist auch eine sog. Hilfsbremsfunktion von Bedeutung, bei welcher z.B. bei einem Defekt der parallel vorhandenen elektro-pneumatischen oder pneumatischen Betriebsbremse bei in Fahrt befindlichem Fahrzeug eine parallel vorhandene pneumatische oder elektro-pneumatische Parkbremseinrichtung als Not- oder Hilfsbremse benutzt wird. Die Hilfs- oder Notbremse kann dann auch hinsichtlich des in dem wenigstens einen Federspeicherbremszylinders anstehenden Drucks geregelt sein.

Wenn beispielsweise die Parkbremssignale von einem vom Fahrer bedienbaren Parkbremsbetätigungsorgan z.B. in Form eines Bedienhebels erzeugt werden, so weist dieser Bedienhebel eine Fahrstellung, eine Parkstellung sowie dazwischen mehrere Hilfsbremsstellungen meist stufenlos auf, in welchen abhängig vom Betätigungsgrad des Bedienhebels (z.B. Schwenkwinkel) ein bestimmtes Hilfsbremssignal und damit auch ein bestimmter Hilfsbremsdruck in den Federspeicherbremszylindern erzeugt und damit eine bestimmte Hilfsbremswirkung hervorgerufen wird. In der Parkstellung wird dann die maximale Hilfsbremskraft aufgebracht. Bei bekannten Parkbremseinrichtungen obliegt es im Falle einer Bremsung oder Hilfsbremsung während der Fahrt mittels der Federspeicherbremszylinder dem Fahrer, über das Parkbremsbetätigungsorgan mit der Hand die Bremskraft bzw. den Bremsdruck so zu regulieren, dass ein Bremsblockieren der Räder, d.h. ein unzulässiger Bremsschlupf verhindert wird. Dabei kann aber nicht ausgeschlossen werden, dass es aufgrund von Fehlbedienungen zu einem übermäßigen Bremsschlupf bzw. Bremsblockieren und damit zu Fahrinstabilität kommt.

In DE 199 42 533 A1 wird ein ABS-Regelung für eine Parkbremseinrichtung offenbart, welche zum Einsatz kommt, wenn die Parkbremse als Notbremse verwendet wird.

Wegen der Trägheit einer hohen Luftmenge, die bei einer elektro-pneumatischen Parkbremseinrichtung hin und her bewegt werden muss und auch wegen der Zuspann- und Lösehysterese eignen sich konventionelle ABS-Systeme, bei denen ausgehend von einem angeforderten Hilfsbremsdruck, bei dem Bremsblockieren auftritt, der Bremsdruck zunächst soweit abgesenkt wird, dass kein Bremsblockieren mehr auftritt und dann wieder bis zum Erreichen der Blockiergrenze erhöht wird, jedoch weniger als Blockierverhinderer für elektropneumatische Parkbremseinrichtungen.

EP 2 939 891 A2 offenbart eine elektrische Feststellbremse, welche in einer ersten Betriebsart wie eine konventionelle Feststellbremse über eine im Inneren eines Fahrerhauses angeordnete Parkbremsbedieneinheit gesteuert wird, falls ein Not-Aus-Trennschalter nicht betätigt wurde. In dieser ersten Betriebsart stellt sich die volle Bremswirkung der Federspeicherbremse zeitlich unverzögert ein. Folglich weist die Parkbremsbedienheit keine Zwischenstellungen zwischen der Stellung "Zuspannen" und der Stellung "Lösen" der Parkbremse auf, um etwa abhängig vom Betätigungsgrad eines Parkbremsbedienorgans verschiedene Hilfsbremsdrücke für die Hilfsbremsfunktion zu erzeugen. Falls der Not-Aus-Trennschalter betätigt wurde, wird die Feststellbremse in einer zweiten Betriebsart gesteuert, in welcher die in den Federspeicherbremsen vorhandene Druckluft über ein zusätzliches Magnetventil und eine zusätzliche Drossel verzögert abgebaut wird, wodurch sich die volle Bremswirkung der Federspeicherbremse verzögert einstellt. Eine Stärke der Drosselung durch die Drossel ist einstellbar, damit die Bremswirkung auf den Beladungszustand sowie die Achslastverteilung einegstellt werden kann.

Der vorliegenden Erfindung liegt daher die Aufgabe zugrunde, eine Drucklufteinrichtung der eingangserwähnten Art derart fortzubilden, dass bei einer Verwendung der elektropneumatischen Parkbremseinrichtung zum Bremsen während der Fahrt (Hilfsbremse) übermäßiges Bremsblockieren weitgehend ausgeschlossen werden kann. Dabei soll der Aufwand zur Realisierung möglichst gering gehalten werden.

Diese Aufgabe wird erfindungsgemäß durch die Merkmale von Anspruch 1 gelöst.

### Offenbarung der Erfindung

Die Erfindung basiert darauf, dass bei einer Drucklufteinrichtung eines Fahrzeugs mit einem elektro-pneumatischen Bremssystem neben einer pneumatischen oder elektropneumatischen Betriebsbremseinrichtung eine elektro-pneumatische Parkbremseinrichtung vorhanden ist, mit welcher neben den originären Parkbremsfunktionen wie "Fahren" und "Parkbremsen" eine Hilfsbremsfunktion durchgeführt werden kann, mit welcher z.B. bei einem Defekt der parallel vorhandenen Betriebsbremseinrichtung bei in Fahrt befindlichem Fahrzeug die elektro-pneumatische Parkbremseinrichtung als Not- oder Hilfsbremse benutzt wird.

Die Erfindung geht daher aus von einer Drucklufteinrichtung eines Fahrzeugs mit einem elektro-pneumatischen Bremssystem, welches eine elektro-pneumatische Parkbremseinrichtung mit Hilfsbremsfunktion beinhaltet, welche wenigstens Folgendes aufweist: Druckluftbetätigte Federspeicherbremszylinder an wenigstens einer Achse, ein elektronisches Parkbremssteuergerät, eine Parkbremsbedieneinheit zum Bedienen der Parkbremse, welche im Rahmen der Hilfsbremsfunktion abhängig von einem Betätigungsgrad eines Parkbremsbedienorgans Hilfsbremsanforderungssignale in das elektronische Steuergerät einsteuert, eine von dem elektronischen Parkbremssteuergerät gesteuerte Magnetventileinrichtung, welche abhängig von den Hilfsbremsanforderungssignalen Hilfsbremsdrücke in die druckluftbetätigten Federspeicherbremszylinder an der Achse einsteuert.

Ausgehend hiervon wird die Achslast an wenigstens einer Achse mit druckluftbetätigten Federspeicherbremszylindern ermittelt, und dann bei einem Einsatz der Parkbremseinrichtung während der Fahrt als Hilfsbremse der Hilfsbremsdruck für die druckluftbetätigten Federspeicherbremszylinder an der Achse abhängig von der an der Achse herrschenden Achslast durch ein elektronisches Parkbremssteuergerät gesteuert oder geregelt.

Die Drucklufteinrichtung gemäß der Erfindung ist folglich dadurch gekennzeichnet, dass Mittel zum Ermitteln einer Achslast der Achse vorgesehen sind, welche von der jeweiligen Achslast der Achse abhängige Achslastsignale in das elektronische Parkbremssteuergerät einsteuern, wobei das elektronische Steuergerät ausgebildet ist, dass es bei einer Einsteuerung von Hilfsbremsanforderungssignalen den Hilfsbremsdruck für die druckluftbetätigten Federspeicherbremszylinder an der Achse abhängig von der an der Achse herrschenden Achslast steuert oder regelt.

Mit anderen Worten wird der Bremsdruck in Federspeicherbremszylindern, die an Rädern einer Achse angeordnet sind, bei einer Betätigung der Parkbremseinrichtung als Hilfsbremse abhängig von der jeweils herrschenden Achslast an dieser Achse gesteuert oder geregelt.

Insbesondere wird der Hilfsbremsdruck mit steigender Achslast an der Achse von dem elektronischen Parkbremssteuergerät auf niedrigere Werte gesteuert oder geregelt und mit sinkender Achslast an der Achse von dem elektronischen Parkbremssteuergerät auf höhere Werte gesteuert oder geregelt wird. Ein niedriger Hilfsbremsdruck in einem Federspeicherbremszylinder resultiert bekanntermaßen in einer höheren Bremskraft als ein hoher Hilfsbremsdruck. Diese Vorgehensweise beruht auf der Erkenntnis, dass Achsen mit höherer Achslast eine geringere Tendenz zum Bremsblockieren aufweisen im Vergleich zu Achsen mit niedrigerer Achslast und daher an Achsen mit hoher Achslast größere Bremskräfte eingesetzt werden können im Vergleich zu Achsen mit niedriger Achslast und demgegenüber größerer Neigung zum Bremsblockieren.

Eine Steuerung kann beispielsweise durch ein in dem elektronischen Parkbremssteuergerät abgelegtes Kennfeld realisiert sein, in welchem eine Abhängigkeit des Hilfsbremsdrucks von der Achslast dargestellt ist. Alternativ kann eine Regelung des Hilfsbremsdrucks vorgesehen sein, derart, dass eine bestimmte Achslast einen Soll-Hilfsbremsdruck vorgibt, auf welchen dann ein beispielsweise mit Hilfe eines Drucksensors erfasster Ist-Hilfsbremsdruck eingeregelt wird.

Mit Hilfe der Drucklufteinrichtung wird dann im Rahmen der Hilfsbremsfunktion der Hilfsbremsdruck in den Federspeicherbremszylindern vorzugsweise jeder Achse individuell gesteuert oder geregelt, je nach Anzahl von Achsen, die Federspeicherbremszylinder aufweisen.

Mit den oben beschriebenen Maßnahmen kann daher beim Hilfsbremsen mittels der Parkbremseinrichtung ein Bremsblockieren in einem gewissen Umfang vermieden und dadurch ein kürzerer Bremsweg erzielt werden. Da die Information über die Achslast bei schweren Nutzfahrzeugen in den meisten Fällen bekannt ist, ist für die Realisierung der Erfindung in der Regel keine zusätzliche Hardware erforderlich.

Durch die in den Unteransprüchen aufgeführten Maßnahmen sind vorteilhafte Weiterbildungen und Verbesserungen der in Anspruch 1 angegebenen Erfindung möglich.

Besonders bevorzugt stammt der Wert für die an der Achse herrschende Achslast von einer Sensoreinrichtung des Fahrzeugs, welche die lastabhängige Einfederung eines Aufbaus des Fahrzeugs gegenüber der Achse erfasst. Die Sensoreinrichtung kann beispielsweise ein Drehpotentiometer an der Achse beinhalten, dessen Drehteil von einem Hebelgetriebe gesteuert wird, welches mit dem Aufbau des Fahrzeugs verbunden ist, derart, dass eine lastabhängige Niveauänderung des Aufbaus in Bezug zur Achse sich ein einem veränderten elektrischen Signal des Drehpotentiometers niederschlägt. Eine solche Sensoreinrichtung wird beispielsweise für eine Niveauregelung in einer Luftfederungseinrichtung eingesetzt, wobei das elektrische Signal das Ist-Niveau des Aufbaus des Fahrzeugs repräsentiert.

Insbesondere sind die Mittel zum Ermitteln der Achslast an der Achse von einer Luftfederungseinrichtung der Drucklufteinrichtung des Fahrzeugs umfasst. Dann stammt der Wert für die an der Achse herrschende Achslast von der Luftfederungseinrichtung. Denn eine solche Luftfederungseinrichtung umfasst an jeder Achse wenigstens zwei Luftfederbälge mit Achslastsensoren, beispielsweise in Form von den Innendruck in den Luftfederbälgen messenden Luftdrucksensoren, wobei dann die Achslast auf der Basis des Luftdrucks der Luftfederbälge an der betreffenden Achse bestimmt wird.

Das die jeweilige Achslast repräsentierende elektrische Signal wird dann beispielsweise datenbusfähig gemacht und über einen Datenbus in das elektronische Parkbremssteuergerät eingesteuert, welches daraufhin einen achslastabhängigen Hilfsbremsdruck in die Federspeicherbremszylinder der betreffenden Achse aussteuert.

Die Erfindung betrifft auch ein Fahrzeug, insbesondere ein schweres Nutzfahrzeug welches eine oben beschriebene Drucklufteinrichtung umfasst.

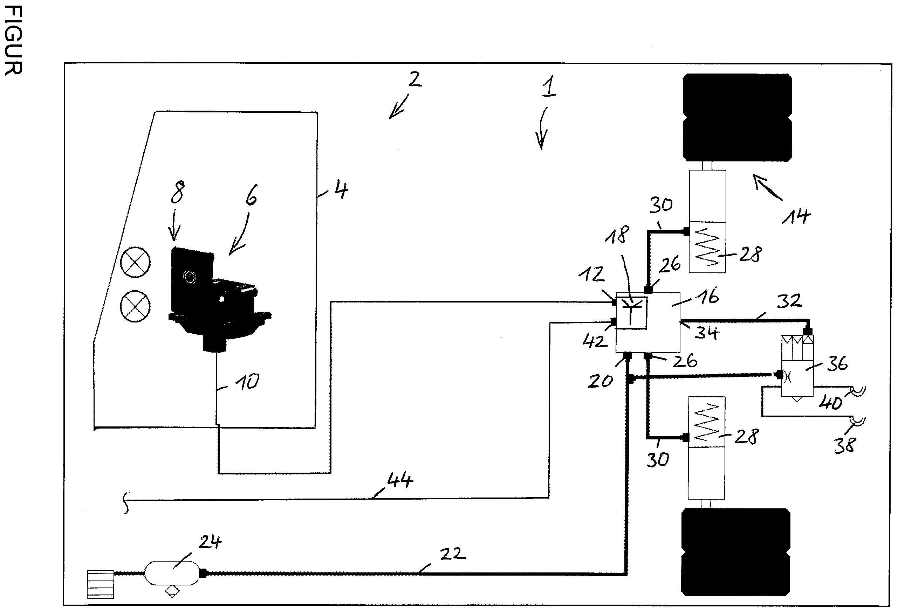

Weitere die Erfindung verbessernde Maßnahmen werden nachstehend gemeinsam mit der Beschreibung eines Ausführungsbeispiels der Erfindung anhand der Zeichnung näher dargestellt.

### Zeichnung

In der ein Ausführungsbeispiel der Erfindung darstellenden Zeichnung zeigt die einzige Figur eine schematische Darstellung eines Aufbaus einer elektro-pneumatischen Parkbremseinrichtung gemäß der Erfindung in einer bevorzugten Ausführungsform.

### Beschreibung des Ausführungsbeispiels

In der **Figur** ist schematisch eine elektro-pneumatischen Parkbremseinrichtung 1 als Teil einer Drucklufteinrichtung eines Fahrzeugs gemäß der Erfindung in einer bevorzugten Ausführungsform dargestellt. Die Drucklufteinrichtung umfasst daneben eine hier nicht gezeigte pneumatische oder elektro-pneumatische Betriebsbremseinrichtung.

Das Fahrzeug ist hier bevorzugt ein Nutzfahrzeug, beispielsweise ein Zugfahrzeug 2 einer Zugfahrzeug-Anhängerkombination, welches eine auf einem Rahmen angeordnete Fahrerkabine 4 aufweist. In der Fahrerkabine 4 ist in Griffweite des Fahrers eine Parkbremsbedieneinrichtung 6 (Hand Control Unit) angeordnet, welche als Parkbremsbedienorgan 8 beispielsweise einen gegenüber einer Konsole stufenlos in verschiedene Schwenkpositionen vorzugsweise manuell schwenkbaren Bedienhebel aufweist. Stattdessen ist selbstverständlich jegliche Art von Parkbremsbedienorgan 8 beispielsweise auch in Form eines Wippschalters oder eines kombinierten Druck-/Zugschalters möglich.

Das Parkbremsbedienorgan 8 ist in verschiedene Positionen stellbar, insbesondere in eine Stellung "Fahren", eine Stellung "Parken", eine Stellung "Neutral" sowie in eine Anzahl von Stellungen zwischen der Stellung "Fahren" und der Stellung "Parken", welche eine Hilfsbremsung mit Hilfe der Parkbremseinrichtung 1 in bekannter Weise auslösen. Dabei hängt die Hilfsbremswirkung von der Position des Parkbremsbedienorgans 8 innerhalb eines der Hilfsbremse zugeordneten Stellbereichs ab. Beispielsweise nimmt die Hilfsbremswirkung ausgehend von der Position "Fahren" in Richtung auf die Position "Parken" zu. Die Parkbremsbedieneinrichtung 8 steuert dann abhängig von einer Betätigung des Parkbremsbedienorgans Parkbremsanforderungssignale in eine Signalleitung 10 ein und in den Bedienstellungen, welche der Hilfsbremsfunktion zugeordnet sind, insbesondere Hilfsbremsanforderungssignale. Für die Hilfsbremse existiert daher in der Regel ein eigener Betätigungsbereich für das Parkbremsbetätigungsorgan 8.

Die Parkbremsbedieneinrichtung 8 ist daher über die Signalleitung 10 mit einem Signalanschluss 12 eines außerhalb der Fahrerkabine 4 und beispielsweise am Rahmen im Bereich einer Hinterachse 14 angeordneten Parkbremsmoduls 16 verbunden, dort genauer mit einem integrierten elektronischen Parkbremssteuergerät 18. Weiterhin ist in dem Parkbremsmodul 16 auch eine elektro-pneumatische, vom dem elektronischen Parkbremssteuergerät 18 gesteuerte und hier aus Maßstabsgründen nicht dargestellte Magnetventileinrichtung integriert, welche eingangsseitig über einen Vorratsanschluss 20 des Parkbremsmoduls 16 und eine Vorratsleitung 22 an einen Druckluftvorrat 24 angeschlossen ist. Ausgangsseitig steht die Magnetventileinrichtung mit zwei Arbeitsanschlüssen 26 des Parkbremsmoduls 16 in Verbindung, an welche zu Federspeicherbremszylindern 28 führende Bremsleitungen 30 angeschlossen sind. Die hier beispielsweise zwei Federspeicherbremszylinder 28 sind jeweils einem Rad der Hinterachse 14 zugeordnet und dienen dem Feststellen des betreffenden Rades im Fahrzeugstillstand, aber auch dem Abbremsen des betreffenden Rades bei in Fahrt befindlichem Fahrzeug im Rahmen der Hilfsbremsfunktion. Weiterhin führt eine Druckleitung 32 von einem Anhängeranschluss 34 des Parkbremsmoduls 16 zu einem Anhängersteuermodul 36, welches die Anhängerbremsen steuert und von welchem Druckleitungen zu einem Kupplungskopf "Bremse" 38 und zu einem Kupplungskopf "Vorrat" 40 in bekannter Weise ausgehen.

Die beiden Federspeicherbremszylinder 28 sind beispielsweise jeweils Bestandteil eines Kombizylinders, in welchen auch ein Betriebsbremszylinder integriert ist. Vorzugsweise sind lediglich an der Hinterachse 14 des Zugfahrzeugs 2 Federspeicherbremszylinder 28 angeordnet.

Die Magnetventileinrichtung des Parkbremsmoduls kann in bekannter Weise beispielsweise ein Bistabilventil und weitere Magnetventile beinhalten und eingangsseitig an den Vorratsanschluss 20 angeschlossen sein. Die Magnetventileinrichtung steuert bevorzugt ein Relaisventil pneumatisch, welches einerseits an den Vorratsanschluss 20 und andererseits an die beiden Arbeitsanschlüsse 26 angeschlossen ist. Abhängig von der pneumatischen Ansteuerung des Relaisventils moduliert dieses dann einen entsprechenden Bremsdruck an den beiden Arbeitsanschlüssen 26 für die Federspeicherbremszylinder 28. Die Magnetventileinrichtung wird wiederum abhängig von den über die Signalleitung 10 und den Signalanschluss 12 geführten Parkbremsanforderungssignale bzw. Hilfsbremsanforderungssignale elektrisch gesteuert, um einen pneumatischen Steuerdruck für das Relaisventil zu erzeugen.

Das Parkbremsmodul 16 ist über einen weiteren Signalanschluss 42, welcher mit dem elektronischen Parkbremssteuergerät 18 verbunden ist, mit einem Fahrzeugdatenbus (z.B. CAN) 44 verbunden. Auf diesem Fahrzeugdatenbus 44 sind Signale vorhanden, welche die momentane Achslast der Hinterachse 14 repräsentieren.

Besonders bevorzugt stammt der Wert für die an der Hinterachse 14 herrschende Achslast von einer hier nicht gezeigten Sensoreinrichtung des Zugfahrzeugs, welche die lastabhängige Einfederung des Aufbaus bzw. hier des Rahmens des Zugfahrzeugs 2 gegenüber der Hinterachse 14 erfasst. Die Sensoreinrichtung kann beispielsweise ein Drehpotentiometer an der Hinterachse 14 beinhalten, dessen Drehteil von einem Hebelgetriebe gesteuert wird, welches mit dem Rahmen des Zugfahrzeugs 2 verbunden ist, derart, dass eine lastabhängige Niveauänderung des Rahmens des Zugfahrzeugs 2 in Bezug zur Hinterachse 14 sich ein einem veränderten elektrischen Signal des Drehpotentiometers niederschlägt. Eine solche Sensoreinrichtung wird beispielsweise für eine Niveauregelung in einer Luftfederungseinrichtung eingesetzt, wobei das elektrische Signal das Ist-Niveau des Aufbaus bzw. des Rahmens des Zugfahrzeugs 2 in Bezug auf die Hinterachse 14 repräsentiert.

Da das Zugfahrzeug 2 hier beispielsweise über eine Luftfederungseinrichtung mit Niveauregulierung verfügt, sind an der Hinterachse 14 wenigstens zwei Luftfederbälge mit Achslastsensoren vorhanden, beispielsweise in Form von den Innendruck in den Luftfederbälgen messenden Luftdrucksensoren, wobei dann die Hinterachslast auf der Basis des Luftdrucks der Luftfederbälge an der Hinterachse 14 bestimmt wird. Stattdessen kann die Hinterachslast selbstverständlich von jeglicher Einrichtung des Zugfahrzeugs 2 direkt oder indirekt bestimmt werden.

Ein der Hinterachslast entsprechendes Signal wird dann in ein elektronisches Steuergerät der Luftfederungseinrichtung eingesteuert, welches wiederum an den Fahrzeugdatenbus 44 angeschlossen ist. Daher wird das die Hinterachslast repräsentierende Signal datenbusfähig gemacht, auf dem Fahrzeugdatenbus 44 zur Verfügung gestellt und dann über den Fahrzeugdatenbus 44 in das elektronische Parkbremssteuergerät 18 eingesteuert.

Das die Hinterachslast repräsentierende Signal ist hier bei einem Zugfahrzeug 2 zum Ankoppeln eines Sattelaufliegers von besonderer Bedeutung, weil bei einem angekoppelten Sattelauflieger eine wesentlich größere Hinterachslast vorliegt als ohne Sattelauflieger. Weiterhin haben solche Zugfahrzeuge 2 in der Regel eine relativ hohen Schwerpunkt, wobei es besonders bei starken Bremsungen zu einer relativ großen dynamischen Achslastverlagerung kommen kann. Insgesamt variieren daher die Normalkräfte, die beim Bremsen von den Rädern der Hinterachse 14 auf die Fahrbahn wirken stark. Im Rahmen der Betriebsbremseinrichtung wird den stark variierenden Normalkräften mit der üblichen Bremsschlupfregelung (ABS) begegnet.

Wenn aus den oben genannten Gründen auf ein ABS für die Parkbremseinrichtung 1 verzichtet werden soll, wenn diese als Hilfs- oder Notbremse während der Fahrt eingesetzt wird, so ist hier vorgesehen, dass bei einem solchen Einsatz der Parkbremseinrichtung 1 der Hilfsbremsdruck für die druckluftbetätigten Federspeicherbremszylinder 28 an der Hinterachse 14 abhängig von der an der Hinterachse 14 herrschenden Achslast durch das elektronische Parkbremssteuergerät 18 gesteuert oder geregelt wird.

Insbesondere wird der Hilfsbremsdruck mit steigender Hinterachslast von dem elektronischen Parkbremssteuergerät 18 auf niedrigere Werte und mit sinkender Hinterachslast auf höhere Werte gesteuert oder geregelt. Ein niedriger Hilfsbremsdruck in einem Federspeicherbremszylinder 28 resultiert bekanntermaßen in einer höheren Bremskraft als ein hoher Hilfsbremsdruck. Diese Vorgehensweise beruht auf der Erkenntnis, dass Achsen mit höherer Achslast eine geringere Tendenz zum Bremsblockieren aufweisen im Vergleich zu Achsen mit niedrigerer Achslast und daher an Achsen mit hoher Achslast größere Bremskräfte eingesetzt werden können im Vergleich zu Achsen mit niedriger Achslast und demgegenüber größerer Neigung zum Bremsblockieren.

Eine Steuerung kann beispielsweise durch ein in dem elektronischen Parkbremssteuergerät 18 abgelegtes Kennfeld realisiert sein, in welchem eine Abhängigkeit des Hilfsbremsdrucks von der Hinterachslast dargestellt ist. Alternativ kann eine Regelung des Hilfsbremsdrucks vorgesehen sein, derart, dass eine bestimmte Hinterachslast einen Soll-Hilfsbremsdruck vorgibt, auf welchen dann ein beispielsweise mit Hilfe eines mit dem Federspeicherbremszylinder 28 in Verbindung stehenden Drucksensors erfasster Ist-Hilfsbremsdruck eingeregelt wird.

Das elektronische Parkbremssteuergerät 18 verarbeitet daher das die Hinterachslast repräsentierende Signal und steuert die Magnetventileinrichtung im Parkbremsmodul 16 an, damit Hilfsbremsdrücke in der oben beschriebenen Weise erzeugt werden. Diese lastabhängige Steuerung oder Regelung des Hilfsbremsdrucks findet bevorzugt ausschließlich dann statt, wenn das Parkbremsbedienorgan 8 sich in einer Stellung oder Position befindet, in welcher die Hilfsbremse aktiv ist. Im Stillstand oder bei einem Fehler bei der Erzeugung der die Hinterachslast repräsentierenden Signale findet die achslastabhängige Steuerung/Regelung des (Hilfs-) Bremsdrucks indes bevorzugt nicht statt.

Sollten die Räder der Hinterachse 14 nicht infolge einer geringen Achslast sondern infolge eines zu niedrigen Reibwerts zwischen Reifen und Fahrbahn bremsblockieren, so kann wie oben beschrieben der Fahrer Bremsblockieren durch eine entsprechende Betätigung des Parkbremsbetätigungsorgans 8 in dem für die Hilfsbremse vorgesehenen Betätigungsbereich verhindern.

Es versteht sich, dass die oben beschriebene achslastabhängige Steuerung oder Regelung nicht nur an einer Hinterachse 14 sondern an jeder mit Federspeicherbremszylindern 28 versehenen Achse und insbesondere an mehreren solcher Achsen vorhanden sein kann. Dann findet die achslastabhängige Steuerung oder Regelung achsindividuell statt.

Weiterhin kann die Steuerung/Regelung der Parkbremse und insbesondere die achslastabhängige Steuerung der Parkbremse als Hilfsbremse nicht nur durch einen ausschließlich dafür vorgesehenes Parkbremsmodul 16 stattfinden sondern auch beispielsweise durch ein Modul, welches auch für weitere Funktionen vorgesehen ist wie beispielsweise eine Druckluftaufbereitungseinheit. Das Parkbremsmodul 16 kann auch in einem weiteren Modul integriert sein.

### BEZUGSZEICHENLISTE

- 1: Parkbremseinrichtung
- 2: Zugfahrzeug
- 4: Führerhaus
- 6: Parkbremsbedieneinrichtung
- 8: Parkbremsbedienorgan
- 10: Signalleitung
- 12: Signalanschluss
- 14: Hinterachse
- 16: Parkbremsmodul
- 18: Parkbremssteuergerät
- 20: Vorratsanschluss
- 22: Vorratsleitung
- 24: Druckluftvorrat
- 26: Arbeitsanschlüsse
- 28: Federspeicherbremszylinder
- 30: Bremsleitungen
- 32: Druckleitung
- 34: Anhängeranschluss
- 36: Anhängersteuermodul
- 38: Kupplungskopf "Bremse"
- 40: Kupplungskopf "Vorrat"
- 42: weiterer Signalanschluss
- 44: Fahrzeugdatenbus

## Patentansprüche

1. Drucklufteinrichtung eines Fahrzeugs (2) mit einem elektro-pneumatischen Bremssystem, welches eine elektro-pneumatische Parkbremseinrichtung (1) mit Hilfsbremsfunktion beinhaltet, welche wenigstens Folgendes aufweist:
a) Druckluftbetätigte Federspeicherbremszylinder (28) an wenigstens einer Achse (14),
b) ein elektronisches Parkbremssteuergerät (18),
c) eine Parkbremsbedieneinheit (6) zum Bedienen der Parkbremse, welche im Rahmen der Hilfsbremsfunktion abhängig von einem Betätigungsgrad eines Parkbremsbedienorgans (8) der Parkbremsbedieneinheit (6) Hilfsbremsanforderungssignale in das elektronische Parkbremssteuergerät (18) einsteuert,
d) eine von dem elektronischen Parkbremssteuergerät (18) gesteuerte Magnetventileinrichtung, welche abhängig von den Hilfsbremsanforderungssignalen der Parkbremsbedieneinheit (6) Hilfsbremsdrücke in die druckluftbetätigten Federspeicherbremszylinder (28) an der Achse (14) einsteuert,
**dadurch gekennzeichnet, dass**
e) Mittel zum Ermitteln einer Achslast der Achse (14) vorgesehen sind, welche von der jeweiligen Achslast der Achse (14) abhängige Achslastsignale in das elektronische Parkbremssteuergerät (18) einsteuern, wobei
f) das elektronische Parkbremssteuergerät (18) ausgebildet ist, dass es bei einer Einsteuerung von Hilfsbremsanforderungssignalen der Parkbremsbedieneinheit (6) den Hilfsbremsdruck für die druckluftbetätigten Federspeicherbremszylinder (28) an der Achse (14) abhängig von der an der Achse (14) herrschenden Achslast steuert oder regelt.

2. Drucklufteinrichtung nach Anspruch 1, **dadurch gekennzeichnet, dass** das elektronische Parkbremssteuergerät (18) ausgebildet ist, dass es den Hilfsbremsdruck mit steigender Achslast an der betreffenden Achse (14) auf niedrigere Werte und mit sinkender Achslast an der betreffenden Achse (14) auf höhere Werte steuert oder regelt.

3. Drucklufteinrichtung nach einem der Ansprüche 1 oder 2, **dadurch gekennzeichnet, dass** der Wert für die an der Achse (14) herrschende Achslast von einer Sensoreinrichtung des Fahrzeugs (2) stammt, welche die lastabhängige Einfederung eines Aufbaus des Fahrzeugs (2) gegenüber der Achse (14) erfasst.

4. Drucklufteinrichtung nach einem der Ansprüche 1 bis 3, **dadurch gekennzeichnet, dass** die Mittel zum Ermitteln der Achslast an der Achse (14) von einer Luftfederungseinrichtung des Fahrzeugs (2) umfasst sind, welche dem elektronischen Parkbremssteuergerät (18) den Wert für die an der Achse (14) herrschende Achslast liefert.

5. Fahrzeug, **dadurch gekennzeichnet, dass** es eine Drucklufteinrichtung nach einem der vorhergehenden Ansprüche umfasst.

## Claims

1. Compressed-air device of a vehicle (2) having an electro-pneumatic brake system which contains an electro-pneumatic parking-brake device (1) with an auxiliary brake function, with at least the following features:
a) compressed-air-actuated spring brake cylinders (28) on at least one axle (14),
b) an electronic parking-brake control unit (18),
c) a parking-brake operating device (6) for operating the parking-brake, which in when the auxiliary brake function is activated, emits auxiliary brake demand signals to the electronic parking-brake control unit (18) in a manner that depends on the degree of actuation of a parking-brake operating element (8) of the parking-brake operating device (6),
d) a solenoid valve device controlled by the electronic parking-brake control unit (18), which as a function of the auxiliary brake demand signals from the parking-brake operating device (6) controls auxiliary brake pressures in the compressed-air-actuated spring brake cylinders (28) on the axle (14), **characterized in that**
e) means for determining an axle load on the axle (14) are provided, which means emit axle load signals that depend on the axle load on the axle (14) at the time, to the electronic parking-brake control unit (18), wherein
f) the electronic control unit (18) is designed such that on receiving auxiliary brake demand signals from the parking-brake operating device (6) it controls or regulates the auxiliary brake pressure for the compressed-air-actuated spring brake cylinders (28) on the axle (14) as a function of the axle load existing on the axle (14) concerned.

2. Compressed-air device according to Claim 1, **characterized in that** the electronic parking-brake control unit (18) is designed such that it controls or regulates the auxiliary brake pressure to lower values as the axle load on the axle (14) concerned increases and to higher values as the axle load on the axle (14) concerned decreases.

3. Compressed-air device according to either of Claims 1 or 2, **characterized in that** the value of the axle load existing on the axle (14) is obtained from a sensor device of the vehicle (2), which detects the load-dependent deflection of a body of the vehicle (2) relative to the axle (14).

4. Compressed-air device according to any of Claims 1 to 3, **characterized in that** the means for determining the axle load on the axle (14) are incorporated in an air-suspension device of the vehicle (2), which delivers the value of the load acting on the axle (14) to the electronic parking-brake control unit (18).

5. Vehicle, **characterized in that** is has a compressed-air device according to any of the preceding claims.

## Revendications

1. Dispositif à air comprimé d'un véhicule (2), comprenant un système électropneumatique de frein, qui comporte un dispositif (1) électropneumatique de frein de stationnement à fonction de freinage auxiliaire, qui a au moins ce qui suit :
a) un cylindre (28) de frein à ressort accumulateur sur au moins un essieu (14),
b) un appareil (18) électronique de commande de frein de stationnement,
c) une unité (6) de commande de frein de stationnement pour commander le frein de stationnement, qui, dans le cadre de la fonction de freinage auxiliaire, envoie, en fonction d'un degré d'actionnement d'un organe (8) de commande de frein de stationnement de l'unité (6) de commande de frein de stationnement, des signaux de demande de freinage auxiliaire à l'appareil (18) électronique de commande de frein de stationnement,
d) un dispositif à électrovanne, qui est commandé par l'appareil (18) électronique de commande de frein de stationnement et qui envoie, en fonction des signaux de demande de freinage auxiliaire, de l'unité (6) de commande de frein de stationnement, des pressions de freinage auxiliaire au cylindre (28) de frein à ressort accumulateur à actionnement par l'air comprimé de l'essieu (14),
**caractérisé en ce que**
e) il est prévu des moyens de détermination d'une charge de l'essieu (14), qui envoient à l'appareil (18) électronique de commande de frein de stationnement des signaux de charge d'essieu, qui dépendent de la charge respective de l'essieu (14), dans lequel
f) l'appareil (18) électronique de commande de frein de stationnement est constitué de manière à commander ou à régler, lorsque des signaux de demande de freinage auxiliaire de l'unité (6) de commande de frein de stationnement sont envoyés, la pression de freinage auxiliaire pour le cylindre (28) de frein à ressort accumulateur à actionnement par l'air comprimé de l'essieu (14), en fonction de la charge d'essieu régnant sur l'essieu (14).

2. Dispositif à air comprimé suivant la revendication 1, **caractérisé en ce que** l'appareil (18) électronique de commande de frein de stationnement est constitué de manière à commander ou à régler la pression de freinage auxiliaire, au fur et à mesure qu'augmente la charge sur l'essieu (14) concerné, à des valeurs plus basses et, au fur et à mesure que la charge diminue sur l'essieu (14) concerné, à des valeurs plus hautes.

3. Dispositif à air comprimé suivant l'une des revendications 1 ou 2, **caractérisé en ce que** la valeur de la charge d'essieu régnant sur l'essieu (14) provient d'un dispositif de capteur du véhicule (2), qui détecte la suspension, qui dépend de la charge, d'une carrosserie du véhicule (2) par rapport à l'essieu (14).

4. Dispositif à air comprimé suivant l'une des revendications 1 à 3, **caractérisé en ce que** les moyens de détermination de la charge sur l'essieu (14) sont englobés par un dispositif de suspension pneumatique du véhicule (2), qui fournit à l'appareil (18) électronique de commande de frein de stationnement la valeur de la charge d'essieu régnant sur l'essieu (14).

5. Véhicule **caractérisé en ce qu'**il comprend un dispositif à air comprimé suivant l'une des revendications précédentes.
